# EUROPEAN PATENT SPECIFICATION

(11) **EP 1 647 574 B1**
(45) Date of publication and mention of the grant of the patent: **26.02.2020**
(21) Application number: 04747197.4
(22) Date of filing: 08.07.2004
(51) Int. Cl.: B05D 5/08, C08L 27/18, C08K 3/30, C08K 3/32, C08K 3/34, C08K 3/00, F16C 33/20

(54) **RESIN COMPOSITION FOR SLIDING MEMBER AND SLIDING MEMBER**
HARZZUSAMMENSETZUNG FÜR GLEITELEMENT UND GLEITELEMENT
COMPOSITION DE RESINE POUR ELEMENT COULISSANT ET ELEMENT COULISSANT

(30) Priority: 18.07.2003 JP 2003198994
(43) Date of publication of application: 19.04.2006
(73) Proprietor: Oiles Corporation, Tokyo (JP)
(72) Inventor: YANASE, Sumihide, Fujisawa-shi, Kanagawa 252-0811 (JP); NAKAMARU, Takashi, Fujisawa-shi Kanagawa 252-0811 (JP); YAMASHITA, Eiichi, Fujisawa-shi Kanagawa 252-0811 (JP); TAKAMURA, Satoshi, Fujisawa-shi Kanagawa 252-0811 (JP)
(74) Representative: J A Kemp LLP
(86) International application number: PCT/JP2004/009729
(87) International publication number: WO 2005/007741

(56) References cited:
- EP-A- 0 684 283
- EP-A- 1 132 634
- JP-A- 3 212 442
- JP-A- 8 041 484
- JP-A- 8 060 170
- JP-A- 11 257 356
- US-A- 5 447 774
- US-A- 5 616 406

## Description

### TECHNICAL FIELD

The present invention relates to a resin composition for sliding member and a sliding member using the same. More particularly, the present invention relates to a lead-free resin composition for sliding member which is excellent in friction and wear characteristics, and a sliding member using the resin composition. The sliding member of the present invention is suitably applied to bearings for general industrial equipments as well as bearings for various vehicles such as automobiles.

### BACKGROUND ART

Conventionally, tetrafluoroethylene resins (hereinafter referred to merely as "PTFE") have been extensively used as sliding members such as bearings because of excellent self-lubricating property and low coefficient of friction as well as excellent chemical resistance and heat resistance. However, since sliding members made of PTFE solely tend to be deteriorated in wear resistance and load carrying capacity, various fillers have been added thereto to compensate these defects depending upon applications thereof.

For example, there have been proposed resin compositions for sliding member, which comprise a component selected from the group consisting of phosphates and barium sulfate, a component selected from the group consisting of magnesium silicate and mica, a component selected from the group consisting of lead, tin, lead-tin alloys and mixtures thereof, and the balance comprising polytetrafluoroethylene (Japanese Patent Application Laid-Open (KOKAI) No. 8-41484(1996)).

In the conventional resin compositions for sliding members, lead or lead alloys have been extensively used as fillers for enhancing a wear resistance of a resin layer formed therefrom. In recent years, lead-free materials have been rapidly developed in the consideration of avoiding environmental problems. The development of lead-free materials has also been demanded in the application field of the above resin compositions for sliding members. More specifically, since the lead or lead alloys are substances having an adverse influence on environment, the use thereof must be prohibited in the consideration of preventing environmental pollution and public nuisance. For this reason, it has been strongly demanded to provide such a PTFE resin composition for sliding member which is capable of exhibiting friction and wear characteristics identical to or more excellent than those of conventional lead-containing resin compositions without using lead or lead alloys therein.

EP 0 684 283 describes a resin composition for a sliding member comprising 1 to 25 wt% of a phosphate or barium sulfate, 1 to 15 wt% of magnesium silicate or mica, 5 to 50 wt% of lead, tin, lead-tin alloy or mixtures thereof, and the balance of polytetrafluoroethylene.

EP 1 132 634 describes a resin composition for a sliding member comprising 5 to 40 wt% of barium sulfate, 1 to 30 wt% of a phosphate, 1 to 10 wt% of at least one selected from a polyimide resin, a phenol resin-calcined product and a polyphenylene sulfone resin and the balance of a polytetrafluoroethylene resin.

US 5 616 406 describes a sliding member comprising a metal mesh and a resin composition that comprises 5 to 30 wt% of glass fibers and/or wollastonite, 1 to 15 wt% of calcium pyrophosphate and/or calcium hydrogen phosphate, 1 to 20 wt% of barium sulfate and the balance of polytetrafluoroethylene.

US 5 447 774 describes a slide member that includes a back plate and a slide layer including a porous metal layer and a composite synthetic resin composition impregnated and coated in pores of the porous metal layer.

### DISCLOSURE OF THE INVENTION

### Problem to be Solved by the Invention

The present invention has been achieved in view of the above problems. An object of the present invention is to provide a lead-free resin composition for sliding member which is capable of exhibiting friction and wear characteristics identical to or more excellent than those of lead-containing resin compositions for sliding member even under various different use conditions such as dry frictional condition, in-oil or oil-lubricating condition and grease-lubricating condition, as well as a sliding member using the resin composition.

As a result of the present inventors' earnest study, it has been found that by blending PTFE with barium sulfate, magnesium silicate and a phosphate at a specific mixing ratio, a sliding member produced from the resultant lead-free resin composition can exhibit friction and wear characteristics identical to or more excellent than those of sliding members produced from lead-containing resin composition even under various different use conditions such as dry frictional condition, in-oil or oil-lubricating condition and grease-lubricating condition.

### Means for Solving the Problem

The present invention has been attained on the basis of the above finding. To accomplish the aim, in a first aspect of the present invention, there is provided a resin composition for sliding member, consisting of:
(a) a tetrafluoroethylene resin; and
(b) fillers, said fillers consisting of:
   - 5 to 30% by weight of the composition of barium sulfate,
   - 1 to 15% by weight of the composition of magnesium silicate, and
   - 1 to 25% by weight of the composition of a phosphate that is a metal salt of metaphosphoric acid; and optionally one or more of
   - a solid lubricant selected from graphite, molybdenum disulfide and a mixture thereof
   - an inorganic filler that is at least one material selected from the group consisting of a potassium titanate powder, potassium titanate fibers, wollastonite, alumina, silicon carbide and iron oxide, and
   - a low-molecular weight tetrafluoroethylene resin.

In a second aspect of the present invention, there is provided a sliding member comprising a steel back plate and a porous sintered metal layer formed on the steel back plate, wherein pores and surface of the porous sintered metal layer are respectively filled and coated with the resin composition for sliding member as defined in the above first aspect.

### Effect of the Invention

In accordance with the present invention, there is provided a lead-free sliding member which is capable of exhibiting excellent sliding properties such as stable friction coefficient and extremely small wear amount even under various different use conditions such as dry condition, in-oil or oil-lubricating condition or grease-lubricating condition.

### BRIEF DESCRIPTION OF THE DRAWING

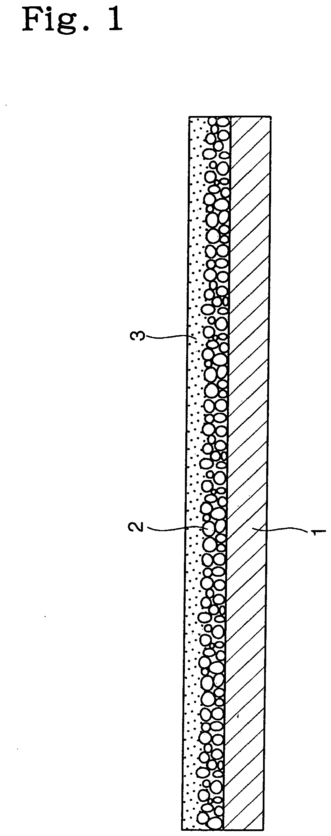

Fig. 1 is a sectional view showing an example of a sliding member according to the present invention.

### PREFERRED EMBODIMENT FOR CARRYING OUT THE INVENTION

The present invention is described in detail below. First, the resin composition for sliding member according to the present invention is explained. Barium sulfate has an effect of eliminating the defects of PTFE such as deteriorated wear resistance and load carrying capacity, and enhancing a wear resistance and a load carrying capacity of the resultant composition to a large extent. The above effect obtained by addition of barium sulfate is more remarkably exhibited, in particular, when the sliding member is used under a low load condition.

Barium sulfate (BaSO₄) may be in the form of either precipitated-type barium sulfate or elutriated-type barium sulfate. Such barium sulfate has been marketed from Sakai Chemical Industry Co., Ltd., and is readily commercially available. Barium sulfate has an average particle size of usually not more than 10 µm, preferably 1 to 5 µm. The amount of barium sulfate blended in the composition is 5 to 30% by weight, preferably 5 to 20% by weight, more preferably 10 to 15% by weight. When the amount of barium sulfate blended is less than 5% by weight, the effect of enhancing the wear resistance and load carrying capacity of PTFE may not be sufficiently exhibited. On the other hand, when the amount of barium sulfate blended is more than 30% by weight, the resultant composition tends to be rather deteriorated in wear resistance.

Magnesium silicate tends to be susceptible to shearing action due to its layer crystal structure and, therefore, has an effect of not only allowing PTFE to exhibit a low frictional property inherent thereto but also improving a wear resistance of the resultant composition. As magnesium silicate, there may be suitably used those containing silicon dioxide (SiO₂) in an amount of usually not less than 40.0% by weight and magnesium oxide (MgO) in an amount of usually not less than 10.0% by weight, wherein a weight ratio of silicon dioxide to magnesium oxide is usually 2.1:1 to 5.0:1, which are less bulky and have a small specific surface area. Specific example of the magnesium silicate may include 2MgO·3SiO₂·nH₂O, 2MgO·6SiO₂·nH₂O, etc. When the weight ratio of silicon dioxide to magnesium oxide is less than 2.1:1 or more than 5.0:1, the low friction property and wear resistance of PTFE tend to be deteriorated.

The amount of magnesium silicate blended in the composition is 1 to 15% by weight, preferably 3 to 13% by weight, more preferably 3 to 10% by weight. When the amount of magnesium silicate blended is less than 1% by weight, the above effect obtained by addition of magnesium silicate may not be sufficiently exhibited. On the other hand, when the amount of magnesium silicate blended is more than 15% by weight, the above-mentioned effect obtained by addition of barium sulfate may be deteriorated.

The phosphate is not a substance having a lubricating property by itself like graphite or molybdenum disulfide. However, the phosphate blended in PTFE can exhibit an effect of promoting formation of a PTFE lubrication film on the surface (friction sliding surface) of a mating member upon sliding thereover.

The phosphate is a metal salt of metaphosphoric acid. Examples of the preferred metals for forming the phosphate may include alkali metals and alkali earth metals. Among these metals, more preferred are lithium (Li), calcium (Ca) and magnesium (Mg). Specific examples of the phosphate may include lithium metaphosphate [(LiPO₃)ₙ], calcium metaphosphate {[(Ca(PO₃)₂]ₙ}, and magnesium metaphosphate {[(Mg(PO₃)₂]ₙ}. Among these phosphates, preferred is magnesium metaphosphate.

Even when the amount of the phosphate blended in PTFE is small, e.g., 1% by weight, the effect of promoting formation of the lubrication film of PTFE can be exhibited, and the effect can be held until reaching 25% by weight. However, when the amount of the phosphate blended in the composition is more than 25% by weight, the amount of the lubrication film formed on the surface of the mating member becomes too large, so that the wear resistance of the sliding member tends to be rather deteriorated. Therefore, the amount of the phosphate blended in the composition is 1 to 25% by weight, preferably 5 to 20% by weight, more preferably 10 to 15% by weight.

PTFE as a main component of the resin composition may be such a PTFE resin used mainly for molding purposes as a molding powder or a fine powder. Examples of PTFE for the molding powder may include "TEFLON (registered trademark) 7-J (tradename)" and "TEFLON (registered trademark) 70-J (tradename)" both produced by Du Pont-Mitsui Fluorochemicals Co., Ltd., "POLYFLON M-12 (tradename)" produced by Daikin Industries, Ltd., "FLUON G163 (tradename)" and "FLUON G190 (tradename)" both produced by Asahi Glass Co., Ltd., or the like. Examples of PTFE for the fine powder may include "TEFLON (registered trademark) 6CJ (tradename)" produced by Du Pont-Mitsui Fluorochemicals Co., Ltd., "POLYFLON F201 (tradename)" produced by Daikin Industries, Ltd., "FLUON CD076 (tradename)" and "FLUON CD090 (tradename)" both produced by Asahi Glass Co., Ltd., or the like.

The amount of PTFE blended in the resin composition is determined as a remainder obtained by subtracting the amount of the fillers blended from the whole amount of the resin composition, and is preferably not less than 50% by weight, more preferably 50 to 70% by weight.

The resin composition for sliding member according to the present invention may further contain, as additional components, a solid lubricant and/or an inorganic filler and/or a low-molecular weight PTFE in order to further enhance a wear resistance thereof.

The solid lubricant is selected from graphite, molybdenum disulfide and a mixture thereof. The amound of the solid lubricant blended is usually 0.1 to 2% by weight, preferably 0.5 to 1% by weight. These solid lubricants may be used singly or in the form of a mixture.

When the amount of the solid lubricant blended is less than 0.1% by weight, the effect of improving a wear resistance of the resultant composition may not be attained. When the amount of the solid lubricant blended is more than 2% by weight, the effect of improving the wear resistance is already saturated and, therefore, the use of such a too large amount of the solid lubricant is uneconomical and meaningless.

The inorganic filler is at least one material selected from the group consisting of a potassium titanate powder, potassium titanate fiber, wollastonite, alumina, silicon carbide and iron oxide. These inorganic fillers may be used singly or in the form of a mixture of any two or more thereof. The amount of the inorganic filler blended is usually 0.1 to 10% by weight, preferably 0.5 to 7% by weight, more preferably 1 to 5% by weight.

The low-molecular weight PTFE is such PTFE which has a reduced molecular weight by decomposing the high-molecular weight PTFE (such as those in the form of the above molding powder or fine powder) by exposure to radiation, or by controlling a molecular weight of PTFE upon polymerization. Specific examples of the low-molecular weight PTFE may include "TLP-10F (tradename)" produced by Du Pont-Mitsui Fluorochemicals Co., Ltd., "LUBRON L-5 (tradename)" produced by Daikin Industries, Ltd., "FLUON L169J (tradename)" produced by Asahi Glass Co., Ltd., and "KTL-8N (tradename)" produced by Kitamura Ltd., or the like. These low-molecular weight PTFE resins are readily pulverized and exhibit a good dispersibility. The amount of the low-molecular weight PTFE blended is usually 1 to 10% by weight, preferably 2 to 7% by weight.

Next, the sliding member using a substrate constituted of a steel back plate and a porous sintered metal layer integrally formed on the steel back plate, and the process for producing the sliding member are explained. As the steel back plate constituting the substrate of the sliding member, there may be used a general structural rolled steel plate. As the steel plate, there is preferably used a continuous steel strip provided in the form of a coiled hoop material, although not particularly limited thereto. Further, there may also be used a steel strip which is cut into an appropriate length. These steel strips may be plated with copper, tin, etc., if required, in order to improve an anti-corrosion property thereof.

The porous sintered metal layer may be made of copper alloys having excellent friction and wear characteristics such as bronze, lead bronze and phosphorus bronze. In addition, the porous sintered metal layer may also be made of materials other than copper alloys such as aluminum alloys and iron, depending upon purposes and applications of the sliding member. The metal powder used for forming the porous sintered metal layer may have a spherical shape, a massive shape, an irregular shape, etc. The metal powder preferably has such a particle size capable of passing through a 80-mesh sieve but incapable of passing through a 350-mesh sieve.

In the sliding member, the porous sintered metal layer has such a structure in which the alloy particles are strongly bonded to each other and further the alloy particles are strongly bonded to the steel back plate. In addition, the porous sintered metal layer exhibits a predetermined thickness and a suitable porosity as required. The thickness of the porous sintered metal layer is usually about 0.15 to 0.40 mm, preferably 0.2 to 0.3 mm, and the porosity thereof is usually not less than about 10% by volume, preferably 15 to 40% by volume.

The resin composition may be produced by the method of mixing the PTFE powder with the respective fillers as required, and then adding a petroleum-based solvent to the resultant mixture, followed by mixing and stirring. The thus obtained resin composition exhibits a good wettability. The mixing of PTFE and the fillers may be performed at temperature of not higher than a room temperature transition point (19°C)of PTFE, preferably at a temperature of 10 to 18°C. Further, the mixing and stirring of the resultant mixture and the petroleum-based solvent may also be performed at the substantially same temperature as used above. When the mixing and stirring procedures are conducted at such a temperature, PTFE is effectively prevented from being formed into fibers, resulting in production of a uniform mixture.

As the petroleum-based solvent, there may be used naphtha, toluene and xylene, as well as an aliphatic hydrocarbon-based solvent and a mixed solvent composed of the aliphatic hydrocarbon-based solvent and a naphthene-based solvent. The petroleum-based solvent may be used in an amount of 15 to 30 parts by weight on the basis of 100 parts by weight of the mixture composed of the PTFE powder and the fillers. When the amount of the petroleum-based solvent used is less than 15 parts by weight, the resin composition having a wettability tends to be deteriorated in spreadability upon conducting the below-mentioned step of impregnating the resin composition into the porous sintered metal layer and coating the surface thereof with the resin composition. As a result, the amount of the resin composition impregnated into the porous sintered metal layer or coated on the surface thereof tends to become uneven. On the other hand, when the amount of the petroleum-based solvent used is more than 30 parts by weight, there tend to be arise problems including not only difficult impregnating and coating works but also non-uniform thickness of a coated layer of the resin composition as well as poor adhesion strength between the resin composition and the sintered layer.

The sliding member of the present invention may be produced though the following steps (a) to (d).

In the step (a), the resin composition having a wettability is spread over the porous sintered metal layer formed on the back plate made of a thin steel plate, and then rolled by a roller, thereby impregnating the resin composition into the sintered layer and forming a coating layer made of the resin composition, which has a uniform thickness, on the sintered layer. In this step, the thickness of the thus formed coating layer is 2 to 2.5 times the thickness of a resin composition-coating layer in the final product. The substantial impregnation of the resin composition into pores of the porous sintered metal layer may proceed in this step.

In the step (b), the back plate treated in the above step (a) is held for several minutes within a drying furnace heated to a temperature of 200 to 250°C, thereby removing the petroleum-based solvent therefrom. Thereafter, the thus dried resin composition is rolled under a pressure of usually 300 to 600 kgf/cm² so as to form a coating layer made of the resin composition which has a predetermined thickness.

In the step (c), the back plate treated in the above step (b) is introduced into a heating furnace and heat-treated at a temperature of usually 360 to 380°C for a period of from several minutes to ten and several minutes to sinter the resin composition. Thereafter, the back plate is taken out from the furnace and then rolled again to control unevenness in dimensions thereof.

In the step (d), the back plate whose dimensions have been controlled in the above step (c) is cooled (air-cooled or naturally cooled) and then subjected to correction rolling treatment, if required, to correct waviness or the like, thereby producing a desired sliding member.

In the sliding member produced through the above steps (a) to (d), the thickness of the porous sintered metal layer is 0.10 to 0.40 mm, and the thickness of the coating layer made of the resin composition is 0.02 to 0.15 mm. The thus produced sliding member may be cut into a flat plate having an appropriate size which can be used as a slide plate, or bent into a rounded plate which can be used as a cylindrical bush.

The sliding member of the present invention has a friction coefficient of 0.05 to 0.12 and a wear amount of not more than 40 *µ*m when being subjected to a grease-lubricating reciprocating slide test under conditions including a sliding velocity of 3 m/min, a load of 200 kgf/cm² and a testing time of 8 hours, and, therefore, can exhibit excellent sliding properties even under a high load condition.

Also, the sliding member of the present invention has a friction coefficient of 0.07 to 0.09 and a wear amount of not more than 30 *µ*m when being subjected to a lubrication-free thrust test under conditions including a sliding velocity of 10 m/min, a load of 100 kgf/cm² and a testing time of 8 hours, and, therefore, can exhibit excellent sliding properties even under a high load condition.

### EXAMPLES:

The present invention is described in more detail by Examples, but the Examples are only illustrative and not intended to limit the scope of the present invention. In the following Examples and Comparative Examples, various sliding properties of the sliding member were evaluated by the following testing methods (1) and (2).

### (1) Reciprocating slide test:

Under the conditions shown in Table 1, the friction coefficient and wear amount were measured. The friction coefficient is represented by the value of change in friction coefficient which was measured from one hour after initiation of the test to termination of the test, and the wear amount was represented by the amount of change in dimension of the sliding surface after the elapse of 8 hours from initiation of the test.

**Table 1**

| | |
|---|---|
| Sliding velocity | 3 m/min |
| Load | 200 kgf/cm² |
| Testing time | 8 hr |
| Lubrication | Sliding surface was coated with a mineral oil-based grease "ONE-LUBER MO (tradename)" produced by Kyodo Yushi Co., Ltd., before test. |
| Mating member | High-carbon chromium bearing steel (SUJ2: JIS G4805) |

### (2) Thrust test:

Under the conditions shown in Table 2, the friction coefficient and wear amount were measured. The friction coefficient was represented by a stable value of friction coefficient which was measured from one hour after initiation of the test to termination of the test, and the wear amount was represented by the amount of change in dimension of the sliding surface after the elapse of 8 hours from initiation of the test.

**Table 2**

| | |
|---|---|
| Sliding velocity | 10 m/min |
| Load | 100 kgf/cm² |
| Testing time | 8 hr |
| Lubrication | Non-lubricated |
| Mating member | Carbon steel for machine structural use (S45C) |

### Example 1:

77% by weight of PTFE "POLYFLON F201 (tradename)" produced by Daikin Kogyo Co., Ltd., 5% by weight of an elutriated-type barium sulfate produced by Sakai Chemical Industry Co., Ltd., 3% by weight of magnesium silicate having a ratio of SiO₂ to MgO of 2.2:1 which was produced by Kyowa Chemical Industry Co., Ltd., and 15% by weight of magnesium metaphosphate were supplied into a Henschel mixer and mixed with each other therein under stirring. 100 parts by weight of the resultant mixture was blended with 20 parts by weight of a petroleum-based solvent "EXXSOL (tradename)" produced by Exxon Chemicals Corp., which was in the form of a mixed solvent composed of an aliphatic hydrocarbon-based solvent and a naphthene-based solvent, and the resultant mixture was mixed at a temperature of 15°C which was not higher than the room temperature transition point of PTFE, thereby obtaining a resin composition.

The thus obtained resin composition was spread over a porous sintered metal (bronze) layer (thickness: 0.25 mm) formed on a steel back plate (thickness: 0.70 mm) made of a thin metal plate, and then rolled such that the thickness of a coating layer made of the resin composition was 0.25 mm, thereby obtaining a multi-layer plate in which pores and surface of the sintered layer were respectively filled and coated with the resin composition. The thus obtained multi-layer plate was held in a hot-air drying furnace at 200°C for 5 minutes to remove the solvent therefrom. The thus dried resin composition layer was rolled under a pressure of 400 kgf/cm² to adjust the thickness of the resin composition layer covering the sintered layer to 0.10 mm.

Next, the thus pressure-treated multi-layer plate was heated and sintered in a heating furnace at 370°C for 10 minutes, and then subjected to adjustment of dimension thereof and correction of waviness thereon, thereby producing a multi-layer sliding member. Fig. 1 shows a section of the thus produced multi-layer sliding member. In Fig. 1, reference numeral (1) represents a steel back plate; reference numeral (2) represents a porous sintered metal layer lined with the steel back plate; and reference numeral (3) represents a coating layer (sliding layer) made of the resin composition which was formed by filling pores of the sintered metal layer with the resin composition and coating the surface thereof with the resin composition. The multi-layer sliding member obtained after completion of the correction procedure was subjected to cutting and bending processes, thereby obtaining a semi-cylindrical test specimen for the multi-layer sliding member which had a radius of 10.0 mm, a length of 20.0 mm and a thickness of 1.05 mm.

### Examples 2 to 8 and Comparative Examples 1 to 4

The same procedure as defined in Example 1 was conducted except that the composition was variously changed as shown in Tables 3 to 5, thereby producing a semi-cylindrical test specimen for the multi-layer sliding member which had a radius of 10.0 mm, a length of 20.0 mm and a thickness of 1.05 mm.

### Example 9:

74.5% by weight of PTFE "POLYFLON F201 (tradename)" produced by Daikin Kogyo Co., Ltd., 10% by weight of an elutriated-type barium sulfate produced by Sakai Chemical Industry Co., Ltd., 3% by weight of magnesium silicate having a ratio of SiO₂ to MgO of 2.2:1 which was produced by Kyowa Chemical Industry Co., Ltd., 12% by weight of magnesium metaphosphate as the phosphate, and 0.5% by weight of graphite as the solid lubricant were supplied into a Henschel mixer and mixed with each other therein under stirring. 100 parts by weight of the resultant mixture was blended with 20 parts by weight of a petroleum-based solvent "EXXSOL (tradename)" produced by Exxon Chemicals Corp., which was in the form of a mixed solvent composed of an aliphatic hydrocarbon-based solvent and a naphthene-based solvent, and the obtained mixture was mixed at a temperature of 15°C which was not higher than the room temperature transition point of PTFE, thereby obtaining a resin composition. Next, a semi-cylindrical test specimen for the multi-layer sliding member which had a radius of 10.0 mm, a length of 20.0 mm and a thickness of 1.05 mm was produced by the same method as defined in Example 1.

### Examples 10 to 20 :

The same procedure as defined in Example 9 was conducted except that the composition was variously changed as shown in Tables 6 to 8, thereby producing a semi-cylindrical test specimen for the multi-layer sliding member which had a radius of 10.0 mm, a length of 20.0 mm and a thickness of 1.05 mm.

### Example 21 :

66.5% by weight of PTFE "POLYFLON F201 (tradename)" produced by Daikin Kogyo Co., Ltd., 10% by weight of an elutriated-type barium sulfate produced by Sakai Chemical Industry Co., Ltd., 4% by weight of magnesium silicate having a ratio of SiO₂ to MgO of 2.2:1 which was produced by Kyowa Chemical Industry Co., Ltd., 12% by weight of magnesium metaphosphate as the phosphate, 5% by weight of a low-molecular weight PTFE "LUBRON L-5 (tradename)" produced by Daikin Kogyo Co., Ltd., 0.5% by weight of graphite as the solid lubricant, and potassium titanate fibers "TIBREX-RPN (tradename)" as the inorganic filler which was produced by Kawatetsu Kogyo Co., Ltd., (now JFE mineral Co., Ltd.) were supplied into a Henschel mixer and mixed with each other therein under stirring. 100 parts by weight of the resultant mixture was blended with 20 parts by weight of the same petroleum-based solvent as used in the above Examples which was in the form of a mixed solvent composed of an aliphatic hydrocarbon-based solvent and a naphthene-based solvent, and the obtained mixture was mixed at a temperature of 15°C which was not higher than the room temperature transition point of PTFE, thereby obtaining a resin composition. Next, a semi-cylindrical test specimen for the multi-layer sliding member which had a radius of 10.0 mm, a length of 20.0 mm and a thickness of 1.05 mm was produced by the same method as defined in Example 1.

### Examples 22 to 24 :

The same procedure as defined in Example 25 was conducted except that the composition was variously changed as shown in Table 9, thereby producing a semi-cylindrical test specimen for the multi-layer sliding member which had a radius of 10.0 mm, a length of 20.0 mm and a thickness of 1.05 mm.

### Comparative Example 5:

80% by weight of PTFE "POLYFLON F201 (tradename)" produced by Daikin Kogyo Co., Ltd., and 20% by weight of a lead powder were supplied into a Henschel mixer and mixed with each other therein under stirring. 100 parts by weight of the resultant mixture was blended with 20 parts by weight of a petroleum-based solvent "EXXSOL (tradename)" produced by Exxon Chemicals Corp., which was in the form of a mixed solvent composed of an aliphatic hydrocarbon-based solvent and a naphthene-based solvent, and the obtained mixture was mixed at a temperature of 15°C which was not higher than the room temperature transition point of PTFE, thereby obtaining a resin composition. Next, a semi-cylindrical test specimen for the multi-layer sliding member which had a radius of 10.0 mm, a length of 20.0 mm and a thickness of 1.05 mm was produced by the same method as defined in Example 1.

### Comparative Examples 6to9 :

The same procedure as defined in Comparative Example 5 was conducted except that the composition was variously changed as shown in Tables 10 and 11, thereby producing a semi-cylindrical test specimen for the multi-layer sliding member which had a radius of 10.0 mm, a length of 20.0 mm and a thickness of 1.05 mm.

The test specimens for the multi-layer sliding member thus obtained in the above Examples and Comparative Examples were subjected to the above reciprocating slide test. The results are shown in Tables 3 to 11. In addition, the multi-layer sliding members obtained in Examples 3,6, 10, 12, 15 and 21 and Comparative Examples 1, 3 and 6 to 9 were each cut into a test specimen of 30 mm square. The thus obtained test specimen for the multi-layer sliding member was subjected to the above thrust test. The results are shown in Tables 12 to 14.

**Table 3**

| | Examples | | | |
|---|---|---|---|---|
| | 1 | 2 | 3 | 4 |
| Composition | | | | |
| PTFE | 77 | 73 | 70 | 77 |
| Barium sulfate | 5 | 5 | 5 | 10 |
| • Kind | A* | A* | A* | B** |
| Magnesium silicate | 3 | 7 | 10 | 3 |
| • SiO₂/MgO (weight ratio) | 2.2 | 2.2 | 2.2 | 2.2 |

| Phosphate | | | | |
|---|---|---|---|---|
| • magnesium metaphosphate | 15 | 15 | 15 | 10 |
| • magnesium pyrophosphate | - | - | - | - |
| • calcium pyrophosphate | - | - | - | - |

| Solid lubricant | | | | |
|---|---|---|---|---|
| • graphite | - | - | - | - |
| • molybdenum disulfide | - | - | - | - |

| Inorganic filler | | | | |
|---|---|---|---|---|
| • potassium titanate powder | - | - | - | - |
| • potassium titanate fibers | - | - | - | - |
| • wollastonite | - | - | - | - |
| • alumina | - | - | - | - |
| Low-molecular weight PTFE | - | - | - | - |

| Various properties | | | | |
|---|---|---|---|---|
| •Friction coefficient (x 10⁻²) | 6-10 | 9-10 | 6-8 | 5-9 |
| •Wear amount (*µ*m) | 40 | 38 | 34 | 32 |

| | | | | |
|---|---|---|---|---|
| Note: A*: elutriated-type; B**: precipitated-type | | | | |

**Table 4**

| | Examples | | | |
|---|---|---|---|---|
| | 5 | CE1 | CE2 | 6 |
| Composition | | | | |
| PTFE | 73 | 70 | 75 | 71 |
| Barium sulfate | 10 | 10 | 15 | 15 |
| • Kind | A* | B** | A* | A* |
| Magnesium silicate | 7 | 10 | 3 | 7 |
| • SiO₂/MgO (weight ratio) | 2.2 | 2.2 | 4.5 | 4.5 |

| Phosphate | | | | |
|---|---|---|---|---|
| • magnesium metaphosphate | 10 | - | - | 7 |
| • magnesium pyrophosphate | - | 10 | - | - |
| • calcium pyrophosphate | - | - | 7 | - |

| Solid lubricant | | | | |
|---|---|---|---|---|
| • graphite | - | - | - | - |
| • molybdenum disulfide | - | - | - | - |

| Inorganic filler | | | | |
|---|---|---|---|---|
| • potassium titanate powder | - | - | - | - |
| • potassium titanate fibers | - | - | - | - |
| • wollastonite | - | - | - | - |
| • alumina | - | - | - | - |
| Low-molecular weight PTFE | - | - | - | - |

| Various properties | | | | |
|---|---|---|---|---|
| •Friction coefficient (x 10⁻²) | 8-10 | 7-9 | 8-10 | 7-10 |
| •Wear amount (*µ*m) | 36 | 38 | 32 | 33 |

| | | | | |
|---|---|---|---|---|
| Note: A*: elutriated-type; B**: precipitated-type | | | | |

**Table 5**

| | Examples | | | |
|---|---|---|---|---|
| | 7 | 8 | CE3 | CE4 |
| Composition | | | | |
| PTFE | 68 | 72 | 68 | 65 |
| Barium sulfate | 15 | 20 | 20 | 20 |
| • Kind | A* | A* | B** | A* |
| Magnesium silicate | 10 | 3 | 7 | 10 |
| • SiO₂/MgO (weight ratio) | 2.2 | 2.2 | 4.5 | 4.5 |

| Phosphate | | | | |
|---|---|---|---|---|
| • magnesium metaphosphate | 7 | 5 | - | - |
| • magnesium pyrophosphate | - | - | 5 | - |
| • calcium pyrophosphate | - | - | - | 5 |

| Solid lubricant | | | | |
|---|---|---|---|---|
| • graphite | - | - | - | - |
| • molybdenum disulfide | - | - | - | - |

| Inorganic filler | | | | |
|---|---|---|---|---|
| • potassium titanate powder | - | - | - | - |
| • potassium titanate fibers | - | - | - | - |
| • wollastonite | - | - | - | - |
| • alumina | - | - | - | - |
| Low-molecular weight PTFE | - | - | - | - |

| Various properties | | | | |
|---|---|---|---|---|
| •Friction coefficient (x 10⁻²) | 7-10 | 6-9 | 8-10 | 6-8 |
| •Wear amount (*µ*m) | 32 | 35 | 32 | 30 |

| | | | | |
|---|---|---|---|---|
| Note: A*: elutriated-type; B**: precipitated-type | | | | |

**Table 6**

| | Examples | | | |
|---|---|---|---|---|
| | 9 | 10 | 11 | 12 |
| Composition | | | | |
| PTFE | 74.5 | 73.5 | 72.5 | 69.5 |
| Barium sulfate | 10 | 10 | 10 | 10 |
| • Kind | A* | B** | B** | A* |
| Magnesium silicate | 3 | 4 | 7 | 10 |
| • SiO₂/MgO (weight ratio) | 2.2 | 2.2 | 2.2 | 2.2 |

| Phosphate | | | | |
|---|---|---|---|---|
| • magnesium metaphosphate | 12 | 12 | 10 | 10 |
| • magnesium pyrophosphate | - | - | - | - |
| • calcium pyrophosphate | - | - | - | - |
| Solid lubricant | | | | |
| • graphite | 0.5 | 0.5 | - | - |
| • molybdenum disulfide | - | - | 0.5 | 0.5 |

| Inorganic filler | | | | |
|---|---|---|---|---|
| • potassium titanate powder | - | - | - | - |
| • potassium titanate fibers | - | - | - | - |
| • wollastonite | - | - | - | - |
| • alumina | - | - | - | - |
| Low-molecular weight PTFE | - | - | - | - |

| Various properties | | | | |
|---|---|---|---|---|
| •Friction coefficient (x 10⁻²) | 6-11 | 8-12 | 6-10 | 9-10 |
| •Wear amount (*µ*m) | 28 | 25 | 27 | 30 |

| | | | | |
|---|---|---|---|---|
| Note: A*: elutriated-type; B**: precipitated-type | | | | |

**Table 7**

| | Examples | | | |
|---|---|---|---|---|
| | 13 | 14 | 15 | 16 |
| Composition | | | | |
| PTFE | 71.5 | 71.5 | 71.5 | 71.5 |
| Barium sulfate | 10 | 10 | 10 | 10 |
| • Kind | A* | A* | A* | A* |
| Magnesium silicate | 3 | 3 | 4 | 4 |
| • SiO₂/MgO (weight ratio) | 2.2 | 2.2 | 2.2 | 2.2 |

| Phosphate | | | | |
|---|---|---|---|---|
| • magnesium metaphosphate | 12 | 12 | 12 | 12 |
| • magnesium pyrophosphate | - | - | - | - |
| • calcium pyrophosphate | - | - | - | - |

| Solid lubricant | | | | |
|---|---|---|---|---|
| • graphite | 0.5 | - | 0.5 | 0.5 |
| • molybdenum disulfide | - | 0.5 | - | - |

| Inorganic filler | | | | |
|---|---|---|---|---|
| • potassium titanate powder | - | 1 | 2 | - |
| • potassium titanate fibers | 1 | - | - | - |
| • wollastonite | - | - | - | 2 |
| • alumina | - | - | - | - |
| Low-molecular weight PTFE | - | - | - | - |

| Various properties | | | | |
|---|---|---|---|---|
| •Friction coefficient (x 10⁻²) | 6-11 | 8-12 | 7-10 | 6-10 |
| •Wear amount (*µ*m) | 21 | 23 | 19 | 24 |

| | | | | |
|---|---|---|---|---|
| Note: A*: elutriated-type | | | | |

**Table 8**

| | Examples | | | |
|---|---|---|---|---|
| | 17 | 18 | 19 | 20 |
| Composition | | | | |
| PTFE | 68.5 | 66.5 | 65.5 | 65.5 |
| Barium sulfate | 10 | 10 | 10 | 10 |
| • Kind | A* | A* | A* | A* |
| Magnesium silicate | 7 | 7 | 10 | 10 |
| • SiO₂/MgO (weight ratio) | 2.2 | 2.2 | 2.2 | 2.2 |

| Phosphate | | | | |
|---|---|---|---|---|
| • magnesium metaphosphate | 12 | 12 | 12 | 12 |
| • magnesium pyrophosphate | - | - | - | - |
| • calcium pyrophosphate | - | - | - | - |

| Solid lubricant | | | | |
|---|---|---|---|---|
| • graphite | 0.5 | 0.5 | - | - |
| • molybdenum disulfide | - | - | 0.5 | 0.5 |

| Inorganic filler | | | | |
|---|---|---|---|---|
| • potassium titanate powder | - | 4 | - | - |
| • potassium titanate fibers | 2 | - | - | - |
| • wollastonite | - | - | 2 | - |
| • alumina | - | - | - | 2 |
| Low-molecular weight PTFE | - | - | - | - |

| Various properties | | | | |
|---|---|---|---|---|
| •Friction coefficient (x 10⁻²) | 7-10 | 6-9 | 8-10 | 8-11 |
| •Wear amount (*µ*m) | 23 | 18 | 24 | 25 |

| | | | | |
|---|---|---|---|---|
| Note: A*: elutriated-type | | | | |

**Table 9**

| | Examples | | | |
|---|---|---|---|---|
| | 21 | 22 | 23 | 24 |
| Composition | | | | |
| PTFE | 66.5 | 63.5 | 66.5 | 63.5 |
| Barium sulfate | 10 | 10 | 10 | 10 |
| • Kind | A* | B** | A* | A* |
| Magnesium silicate | 4 | 7 | 4 | 7 |
| • SiO₂/MgO (weight ratio) | 2.2 | 2.2 | 2.2 | 2.2 |

| Phosphate | | | | |
|---|---|---|---|---|
| • magnesium metaphosphate | 12 | 12 | 12 | 12 |
| • magnesium pyrophosphate | - | - | - | - |
| • calcium pyrophosphate | - | - | - | - |

| Solid lubricant | | | | |
|---|---|---|---|---|
| • graphite | 0.5 | 0.5 | 0.5 | 0.5 |
| • molybdenum disulfide | - | - | - | - |

| Inorganic filler | | | | |
|---|---|---|---|---|
| • potassium titanate powder | - | 2 | - | - |
| • potassium titanate fibers | 2 | - | - | - |
| • wollastonite | - | - | 2 | - |
| • alumina | - | - | - | 2 |
| Low-molecular weight PTFE | 5 | 5 | 5 | 5 |

| Various properties | | | | |
|---|---|---|---|---|
| •Friction coefficient (x 10⁻²) | 6-8 | 6-9 | 8-10 | 7-9 |
| •Wear amount (*µ*m) | 19 | 20 | 22 | 20 |

| | | | | |
|---|---|---|---|---|
| Note: A*: elutriated-type; B**: precipitated-type | | | | |

**Table 10**

| | Comparative Examples | | |
|---|---|---|---|
| | 5 | 6 | 7 |
| Composition | | | |
| PTFE | 80 | 70 | 50 |
| Barium sulfate | - | - | 15 |
| • Kind | - | - | A* |
| Magnesium silicate | - | - | 15 |
| • SiO₂/MgO (weight ratio) | - | - | 2.2 |

| Phosphate | | | |
|---|---|---|---|
| • calcium hydrogenphosphate | - | 10 | - |
| Lead | 20 | 20 | 20 |

| Various properties | | | |
|---|---|---|---|
| •Friction coefficient (x 10⁻²) | 12-16 | 12-15 | 8-10 |
| •Wear amount (*µ*m) | 72 | 60 | 31 |

| | | | |
|---|---|---|---|
| Note: A*: elutriated-type | | | |

**Table 11**

| | Comparative Examples | |
|---|---|---|
| | 8 | 9 |
| Composition | | |
| PTFE | 65 | 75 |
| Barium sulfate | 20 | - |
| • Kind | A* | - |
| Magnesium silicate | 15 | 15 |
| • SiO₂/MgO (weight ratio) | 2.2 | 2.2 |

| Phosphate | | |
|---|---|---|
| • calcium hydrogenphosphate | - | 10 |
| Lead | - | - |

| Various properties | | |
|---|---|---|
| •Friction coefficient (x 10⁻²) | 14-16 | 8-12 |
| •Wear amount (*µ*m) | 49 | 45 |

| | | |
|---|---|---|
| Note: A*: elutriated-type | | |

**Table 12**

| | Examples | | | |
|---|---|---|---|---|
| | 3 | CE1 | 6 | CE3 |
| Various properties | | | | |
| •Friction coefficient (x 10⁻²) | 7 | 8.5 | 8 | 7 |
| •Wear amount (*µ*m) | 24 | 28 | 26 | 26 |

**Table 13**

| | Examples | | | |
|---|---|---|---|---|
| | 10 | 12 | 15 | 21 |
| Various properties | | | | |
| •Friction coefficient (x 10^{- 2}) | 8 | 8 | 9 | 8 |
| •Wear amount (*µ*m) | 9 | 10 | 6 | 6 |

**Table 14**

| | Comp arative Examples | | | |
|---|---|---|---|---|
| | 6 | 7 | 8 | 9 |
| Various properties | | | | |
| •Friction coefficient (x 10⁻²) | 11 | 8 | 15 | 12 |
| •Wear amount (*µ*m) | 85 | 8 | 20 | 35 |

The materials used in the above Tables are as follows:
PTFE: "POLYFLON F201 (tradename)" produced by Daikin Kogyo Co., Ltd.,; barium sulfate: elutriated-type or precipitated-type barium sulfate produced by Sakai Chemical Industry Co., Ltd.; magnesium silicate: magnesium silicate having a ratio of SiO₂ to MgO of 2.2 or 4.5 which was produced by Kyowa Chemical Industry Co., Ltd.; potassium titanate powder: "TIBREX-AF (tradename)" produced by Kawatetsu Kogyo Co., Ltd. (now JFE Mineral Co., Ltd.); potassium titanate fibers: "TIBREX-RPN (tradename)" produced by Kawatetsu Kogyo Co., Ltd. (now JFE Mineral Co., Ltd.); wollastonite: wollastonite produced by Kawatetsu Kogyo Co., Ltd. (now JFE Mineral Co., Ltd.); and low-molecular weight PTFE: "LUBRON L-5 (tradename)" produced by Daikin Kogyo Co., Ltd.

From the above experimental results, it was confirmed that the sliding members obtained in the respective Examples were excellent in sliding properties under a dry condition, in-oil or oil-lubricating condition or a grease-lubricating condition, and exhibited friction and wear characteristics identical to or more excellent than those of the lead-containing sliding member obtained in Comparative Example 7 .

### Explanation of Reference Numerals:

1: Steel back plate; 2: Porous sintered metal layer; 3: Coating layer (Sliding layer)

## Claims

1. A resin composition for sliding member, consisting of:
(a) a tetrafluoroethylene resin; and
(b) fillers, said fillers consisting of:
- 5 to 30% by weight of the composition of barium sulfate,
- 1 to 15% by weight of the composition of magnesium silicate, and
- 1 to 25% by weight of the composition of a phosphate that is a metal salt of metaphosphoric acid,
and optionally one or more of
- a solid lubricant selected from graphite, molybdenum disulfide, and a mixture thereof,
- an inorganic filler that is at least one material selected from the group consisting of a potassium titanate powder, potassium titanate fibers, wollastonite, alumina, silicon carbide and iron oxide, and
- a low-molecular weight tetrafluoroethylene resin.

2. A resin composition for sliding member according to claim 1, comprising 0.1 to 2% by weight of the solid lubricant.

3. A resin composition for sliding member according to claim 1 or 2, comprising 0.1 to 10% by weight of the inorganic filler.

4. A resin composition for sliding member according to any one of claims 1 to 3, comprising 1 to 10% by weight of the low-molecular weight tetrafluoroethylene resin.

5. A sliding member comprising a steel back plate and a porous sintered metal layer formed on the steel back plate, wherein pores and surface of the porous sintered metal layer are respectively filled and coated with the resin composition for sliding member as defined in any one of claims 1 to 4.

## Patentansprüche

1. Harzzusammensetzung für ein Gleitelement, bestehend aus:
(a) einem Tetrafluorethylenharz; und
(b) Füllstoffen, wobei die Füllstoffe aus Folgendem bestehen:
- 5 bis 30 Gew.-% der Zusammensetzung aus Bariumsulfat,
- 1 bis 15 Gew.-% der Zusammensetzung aus Magnesiumsilikat und
- 1 bis 25 Gew.-% der Zusammensetzung aus einem Phosphat, das ein Metallsalz aus Metaphosphorsäure ist,
und optional einem oder mehreren aus
- einem Festschmierstoff, ausgewählt aus Graphit, Molybdändisulfid und einem Gemisch davon,
- einem anorganischen Füllstoff, der mindestens ein Material ist, ausgewählt aus der Gruppe bestehend aus einem Kaliumtitanatpulver, Kaliumtitanatfasern, Wollastonit, Aluminiumoxid, Siliziumkarbid und Eisenoxid und
- einem Tetrafluorethylenharz mit niedrigem Molekulargewicht.

2. Harzzusammensetzung für ein Gleitelement nach Anspruch 1, umfassend 0,1 bis 2 Gew.-% des Festschmierstoffs.

3. Harzzusammensetzung für ein Gleitelement nach Anspruch 1 oder 2, umfassend 0,1 bis 10 Gew.-% des anorganischen Füllstoffs.

4. Harzzusammensetzung für ein Gleitelement nach einem der Ansprüche 1 bis 3, umfassend 1 bis 10 Gew.-% des Tetrafluorethylenharzes mit niedrigem Molekulargewicht.

5. Gleitelement, umfassend eine Stahlrückplatte und eine poröse Sintermetallschicht, die an der Stahlrückplatte gebildet ist, wobei Poren und Oberfläche der porösen Sintermetallschicht jeweils mit der Harzzusammensetzung für ein Gleitelement nach einem der Ansprüche 1 bis 4 befüllt und beschichtet sind.

## Revendications

1. Composition de résine pour élément coulissant, constituée de :
(a) résine de tétrafluoroéthylène ; et
(b) charges, lesdites charges constituées de :
- 5 à 30% en poids de la composition de sulfate de baryum,
- 1 à 15% en poids de la composition de silicate de magnésium, et
- 1 à 25% en poids de la composition d'un phosphate qui est un sel métallique d'acide métaphosphorique,
et éventuellement un ou plusieurs
- d'un lubrifiant solide choisi parmi le graphite, le bisulfure de molybdène et un mélange de ceux-ci,
- d'une charge inorganique qui est au moins un matériau choisi dans le groupe constitué par une poudre de titanate de potassium, des fibres de titanate de potassium, de la wollastonite, de l'alumine, du carbure de silicium et de l'oxyde de fer, et
- d'une résine de tétrafluoroéthylène de faible poids moléculaire.

2. Composition de résine pour élément coulissant selon la revendication 1, comprenant 0,1 à 2% en poids du lubrifiant solide.

3. Composition de résine pour élément coulissant selon les revendications 1 ou 2, comprenant 0,1 à 10% en poids de la charge inorganique.

4. Composition de résine pour élément coulissant selon l'une quelconque des revendications 1 à 3, comprenant 1 à 10% en poids de la résine de tétrafluoroéthylène de faible poids moléculaire.

5. Elément coulissant comprenant une plaque arrière en acier et une couche métallique frittée poreuse formée sur la plaque arrière en acier, dans laquelle les pores et la surface de la couche métallique frittée poreuse sont respectivement remplis et revêtus de la composition de résine pour élément coulissant telle que définie dans l'une quelconque des revendications 1 à 4.
